# EUROPEAN PATENT SPECIFICATION

(11) **EP 1 355 056 B1**
(45) Date of publication and mention of the grant of the patent: **25.10.2006**
(21) Application number: 03008960.1
(22) Date of filing: 16.04.2003
(51) Int. Cl.: F02M 21/02, F02M 51/06

(54) **Internal combustion engine gaseous fuel injector**
Einspritzventil für gasförmigen Brennstoff eines Verbrennungsmotors
Injecteur de carburants gazeux pour moteur à combustion interne

(30) Priority: 17.04.2002 IT TO20020332
(43) Date of publication of application: 22.10.2003
(73) Proprietor: M.T.M. - S.r.l. con unico socio, 12062 Cherasco (IT)
(72) Inventor: Costamagna, Mariano, 12062 Cherasco (IT); Mandrile, Massimiliano, 12038 Savigliano (IT); Ceratto, Danilo, 12051 Alba (IT)
(74) Representative: Cerbaro, Elena

(56) References cited:
- EP-A- 0 987 479
- GB-A- 566 211
- US-A- 6 006 728

## Description

The present invention relates to an internal combustion engine gaseous fuel injector.

As is known, gaseous fuel is supplied to a vehicle internal combustion engine cylinder using injectors of the type comprising a fuel conduit, a fuel on/off member, and an electromagnetic control device for moving the on/off member between a disabling position disabling fuel flow to the outlet conduit, and a rest position allowing fuel to flow freely along the outlet conduit to the relative cylinder.

Though widely used, known injectors of the above type are unsatisfactory, mainly on account of poor long-term reliability and efficiency. That is, the fuel flowing through the injector comes into contact with, and inevitably deposits fuel-carried impurities on, both the control device and connected parts in relative motion; which impurities, on the one hand, gradually reduce the electric and/or electromagnetic capacity of the various parts of the control device, and, on the other, gradually increase the resistance to movement of the component parts in relative motion. The construction characteristics of known injectors of the above type also make them difficult and time-consuming to assemble and replace.

US 6,006,728 discloses a fuel injection system in which a diaphram is interposed between a value body an the fuel.

It is an object of the present invention to provide an injector designed to provide a straightforward, low-cost solution to the aforementioned drawbacks, and which, in particular, is easy to install and of substantially constant long-term efficiency and reliability.

According to the present invention, there is provided a gaseous fuel injector, as defined in Claim 1.

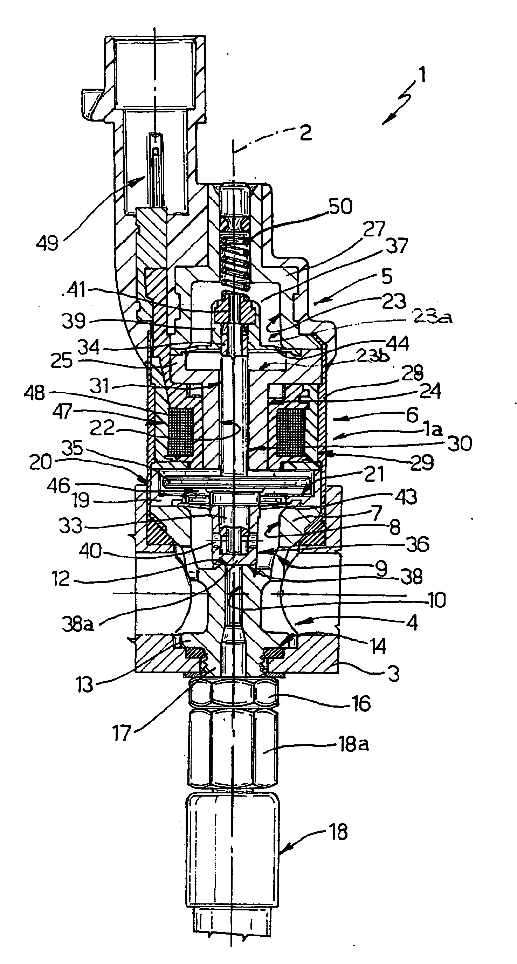

The invention will be described with reference to the accompanying drawing, which shows a section of a preferred embodiment of the injector according to the present invention, fitted to a hollow supporting and fuel feed body.

Number 1 in the accompanying drawing indicates as a whole an injector for feeding gaseous fuel, preferably LPG or methane, to an internal combustion engine not shown. Injector 1 in the accompanying drawing has a longitudinal axis 2, and is connected to a hollow supporting and fuel feed body 3 common to all the engine feed assembly injectors and commonly known as a "flute". Injector 1 comprises a rigid structure 1a, in turn comprising two lateral portions 4 and 5, and an intermediate portion 6 connected to one another in known manner.

Portion 4 extends through supporting body 3, and comprises a contoured body 7, which defines a cavity 8 communicating with the inside of supporting and fuel feed body 3 through a fuel inlet 9, and a fuel outlet conduit 10 coaxial with axis 2 and communicating with cavity 8 through a bottom surface 12 of cavity 8 adjacent to inlet 9. Body 7 terminates with a connecting portion, an outer flange 13 of which is forced against an inner shoulder 14 of supporting body 3 by a nut 16, which is screwed to an end portion 17 of body 7 projecting outwards of body 3 and to which is screwed a threaded end 18a of a pipe 18 for conveying fuel to the relative cylinder.

Body 7 contacts an annular bottom wall 19 of a cup-shaped body 20, which forms part of intermediate portion 6 and partly defines a chamber 21 communicating, via a cylindrical conduit 22 coaxial with axis 2 and inside intermediate portion 6, with a further, cylindrical, chamber 23 formed in lateral portion 5. More specifically, conduit 22 is formed through a body 24, which forms an inner portion of intermediate portion 6, has a substantially T-shaped longitudinal section, and has an integral annular portion 25 coaxial with axis 2 and of an inside diameter substantially equal to that of chamber 23. A bell 27, partly defining chamber 23, is forced onto tubular body 24, and is connected integrally to body 7 by an outer jacket 28, which grips together bodies 7, 20, 24, bell 27, and a block 29 described below.

Chambers 8, 23 and conduit 22 house a shutter member 30, which extends coaxially with axis 2, and comprises a tubular stem or rod 31 having an intermediate portion engaging conduit 22 in axially sliding, radially slack manner, and two opposite end portions 33 and 34 housed inside chamber 8 and chamber 23 respectively. Shutter 30 also comprises an intermediate outer flange 35 made of metal, housed inside chamber 21, and of external dimensions smaller than the corresponding internal dimensions of chamber 21. Shutter 30 is connected to structure 1a, in axially sliding manner and coaxially with axis 2, by a connecting device comprising two bodies 36 and 37 housed inside respective chambers 8 and 23, and each formed in one piece from elastomeric material. Bodies 36 and 37 comprise respective caps 38 and 39 fitted in fluidtight manner to respective portions 33 and 34 of rod 31, and having, respectively, a radial passage 40 and an axial passage 41 connecting the space inside rod 31 to relative chambers 8, 23. Bodies 36 and 37 also comprise respective elastic radial annular membranes 43 and 44 integral with respective caps 38 and 39, and having respective outer peripheral portions gripped in fluidtight manner between body 7 and wall 19, and between annular portion 25 and bell 27 respectively. Cap 39 and relative membrane 44 divide chamber 23 into two chambers 23a and 23b; and chamber 23a communicates with chamber 8 via the through hole in rod 31.

Together with wall 19, annular portion 25 and jacket 28, bodies 36 and 37 define an airtight chamber or compartment 46, of which chamber 23b forms part, and into which fuel is not permitted. And, in addition to shutter 30, compartment 46 houses a known electromagnetic device 47 for controlling shutter 30.

Control device 47 comprises block 29, which houses a winding 48 connected electrically to an electric connector 49. Device 47 is activated to exert on flange 35 a force in opposition to that of a thrust spring 50 compressed between portion 34 and an axial shoulder of bell 27, and to move shutter 30 between a disabling position disabling fuel flow to outlet conduit 10, and in which a bottom wall 38a of cap 38 is forced by spring 50 against surface 12, and a withdrawn rest position, in which wall 38a is detached from wall 12 to allow fuel flow between inlet 9 and outlet conduit 10 via chamber 8.

In injector 1 described, electromagnetic control device 47, the outer lateral surfaces of shutter 30, and the inner lateral surfaces of the bodies surrounding shutter 30 are therefore perfectly and permanently isolated from the fuel, and so unaffected by any contaminating substances in the fuel, which, in fact, is contained solely inside chambers 8 and 23 and rod 31. This is substantially due to the presence of sealing bodies 36 and 37 fitted in fluidtight manner to rod 31 and to the corresponding parts of structure 1a; and the absence of contact with the fuel provides for an injector of practically constant long-term efficiency and reliability, which are also greatly improved, as compared with known solutions, by injector 1 having no parts connected by sliding couplings. Bodies 36 and 37, in fact, besides sealing, also provide for supporting shutter 30 coaxially with axis 2 and detached at all times from the walls defining conduit 22 and chamber 21. In other words, shutter 30 moves, in use, along the axis without ever sliding in contact with any fixed parts, thus improving response time, while at the same time reducing the control action of control device 47, which is therefore smaller and cheaper as compared with known solutions.

Finally, providing a connecting body with a threaded stem extending through and projecting outwards of the "flute" enables the injector to be connected firmly, accurately and quickly using a straightforward nut screwed from the outside. The same threaded stem is also conveniently used to connect pipe 18.

Clearly, changes may be made to injector 1 as described herein without, however, departing from the scope of the present invention. In particular, the shape and/or size of bodies 36 and 37 may differ from those indicated by way of example; and changes may also be made to shutter 30 and the way in which shutter 30 is connected to structure 1a.

## Claims

1. An injector (1) for feeding gaseous fuel to an internal combustion engine, the injector (1) comprising a hollow structure (1a) defining a fuel inlet (9) and a fuel outlet conduit (10) of the injector (1); a shutter member (30) located between said inlet (9) and said outlet conduit (IO); and an electromagnetic control device (47) for moving said shutter member (30) in a longitudinal direction (2), said electromagnetic device (47) and said shutter member (30) being housed inside an airtight compartment (46) inaccessible by the fuel; said shutter member (30) comprising a first (33) and an opposite second (34) longitudinal end portion; first (36) sealing means being fitted in fluid tight manner to the first (33) end portion and to said structure (1a); **characterized in that** it further comprises second sealing means (37) fitted to said second end portion of said shutter and to said structure (1a) to define said airtight compartment (46).

2. An injector as claimed in Claim 1, **characterized in that** said first (36) and said second (37) sealing means comprise respective elastically deformable membranes (43) (44) carried by the first (33) and second (34) end portion respectively.

3. An injector as claimed in Claim 2, c**haracterized in that** said first (36) and said second (37) sealing means comprise respective caps (38)(39) fitted in fluidtight manner to the first (33) and the second (34) said end portion respectively; each said membrane (43)(44) being an annular membrane, and comprising an inner annular portion connected integrally to the relative said cap (38)(39), and an outer peripheral portion gripped in fluidtight manner between two respective retaining bodies of said structure (1a).

4. An injector as claimed in Claim 3, **characterized in that** each said cap (38) (39) and the relative said membrane (43)(44) form part of a respective body of elastomeric material formed in one piece.

5. An injector as claimed in Claim 3 or 4, **characterized by** comprising a through conduit (22) extending through said airtight compartment (46), coaxially with a longitudinal axis (2), and surrounded by an electric winding (48) of said electromagnetic device (47); the through conduit (22) being engaged radially loosely by a hollow rod (31) of said shutter member (30); said caps (38)(39) being fitted to opposite ends of said rod (31), and having respective passages (40) (41) connecting the space inside the rod (31) to respective fuel chambers (8) (23) located on opposite sides of said airtight compartment (46) ; and one (8) of said fuel chambers (8) (23) being located adjacent to said outlet conduit (10) and communicating with said inlet (9).

6. An injector as claimed in Claim 5, **characterized by** comprising connecting means for connecting said shutter member (30) to a supporting structure (la); said connecting means comprising said first (36) and second (37) sealing means.

7. An injector as claimed in any one of the foregoing Claims, **characterized by** comprising a connecting portion (13, 17), through which said outlet conduit (10) extends; said connecting portion having at least one externally threaded portion (17).

8. An injector as claimed in Claim 7, **characterized in that** said connecting portion comprises an outer shoulder (13) which rests on a supporting surface of a hollow supporting and fuel feed body (3) common to all the injectors on the engine; said externally threaded portion (17) projecting outwards of said hollow supporting and fuel feed body (3); and first nut means (16) being screwed to said externally threaded portion (17) to force said outer shoulder (13) against said supporting surface.

9. An injector as claimed in Claim 8, **characterized in that** second nut means (18a), of a pipe (18) for conveying the fuel supplied by said injector (1), are screwed to said externally threaded portion (17).

## Patentansprüche

1. Einspritzdüse (1) zum Einführen von gasförmigem Brennstoff in einen Verbrennungsmotor, wobei die Einspritzdüse (1) aufweist eine Hohlstruktur (1a), die eine Brennstoffeinlass- (9) und eine Brennstoffauslassleitung (10) der Einspritzdüse (1) begrenzt; ein Verschlusselement (30), das zwischen der Einlass- (9) und der Auslassleitung (10) angeordnet ist; und eine elektromagnetische Steuereinrichtung (47) zum Bewegen des Verschlusselements (30) in einer Längsrichtung (2), wobei die elektromagnetische Einrichtung (47) und das Verschlusselement (30) in einer für den Brennstoff nicht zugänglichen, luftdichten Abteilung (46) aufgenommen sind; wobei das Verschlusselement (30) aufweist einen ersten (33) und einen entgegen gesetzten zweiten (34) Endbereich in Längsrichtung; wobei erste (36) Dichtungsmittel in fluiddichter Weise an dem ersten (33) Endbereich und an der Struktur (1a) sitzen; **dadurch gekennzeichnet, dass** diese ferner zweite Dichtungsmittel (37) aufweist, die an dem zweiten Endbereich des Verschlusselements und der Struktur (1a) sitzen, um die luftdichte Abteilung (46) zu begrenzen.

2. Einspritzdüse nach Anspruch 1, **dadurch gekennzeichnet, dass** die ersten (36) und zweiten (37) Dichtungsmittel jeweils elastisch verformbare Membranen (43, 44) aufweisen, die durch den ersten (33) bzw. zweiten (34) Endbereich getragen werden.

3. Einspritzdüse nach Anspruch 2, **dadurch gekennzeichnet, dass** die ersten (36) und zweiten (37) Dichtungsmittel jeweilige Kappen (38, 39) aufweisen, die in fluiddichter Weise an dem ersten (33) bzw. dem zweiten (34) Endbereich sitzen; wobei jede Membrane (43, 44) eine Ringmembrane ist und einen inneren Ringabschnitt aufweist, der einstückig mit der jeweiligen Kappe (38, 39) verbunden ist, und einen äußeren Umfangsabschnitt aufweist, der in fluiddichter Weise zwischen zwei jeweiligen Haltekörpern der Struktur (1a) eingespannt sind.

4. Einspritzdüse nach Anspruch 3, **dadurch gekennzeichnet, dass** jede Kappe (38, 39) und die zugehörige Membrane (43, 44) einen Teil eines jeweiligen, in einem Stück ausgebildeten Körpers aus elastomerem Material bilden.

5. Einspritzdüse nach Anspruch 3 oder 4, **dadurch gekennzeichnet, dass** diese eine Durchgangsleitung (22) aufweist, die sich durch die luftdichte Abteilung (46) koaxial zu einer Längsachse (2) hindurch erstreckt und durch eine elektrische Wicklung (48) der elektromagnetischen Einrichtung (47) umgeben ist; wobei die Durchgangsleitung (22) radial lose durch eine Hohlstange (31) des Verschlusselements (30) berührt wird; wobei die Kappen (38, 39) an entgegen gesetzten Enden der Stange (31) sitzen und jeweilige Durchgänge (40, 41) aufweisen, welche den Raum innerhalb der Stange (31) mit jeweiligen Brennstoffkammern (8, 23) verbinden, die an entgegen gesetzten Seiten der luftdichten Abteilung (46) liegen; und wobei eine (8) der Brennstoffkammern (8, 23) angrenzend an der Auslassleitung (10) angeordnet ist und mit dem Einlass (9) kommuniziert.

6. Einspritzdüse nach Anspruch 5, **dadurch gekennzeichnet, dass** diese Verbindungsmittel zum Verbinden des Verschlusselements (30) mit einer Stützstruktur (1a) umfasst; wobei die Verbindungsmittel die ersten (36) und zweiten (37) Dichtungsmittel umfassen.

7. Einspritzdüse nach einem der vorstehenden Ansprüche, **dadurch gekennzeichnet, dass** diese einen Verbindungsbereich (13, 17) aufweist, durch welchen sich die Auslassleitung (10) hindurch erstreckt; wobei der Verbindungsbereich wenigstens einen Außengewindeabschnitt (17) aufweist.

8. Einspritzdüse nach Anspruch 7, **dadurch gekennzeichnet, dass** der Verbindungsbereich eine äußere Schulter (13) aufweist, welche auf einer Stützfläche eines hohlen Stütz- und Brennstoffzuführgehäuses (3) lagert, die für alle Einspritzdüsen des Motors gemeinsam bestimmt ist; wobei der Außengewindeabschnitt (17) von dem hohlen Stütz- und Brennstoffzuführgehäuse (3) nach außen vorsteht; und wobei eine erste Mutter (16) auf den Außengewindeabschnitt (17) geschraubt ist, um die äußere Schulter (13) gegen die Stützfläche zu drücken.

9. Einspritzdüse nach Anspruch 8, **dadurch gekennzeichnet, dass** eine zweite Mutter (18a) eines Rohres (18) zum Fördern des durch die Einspritzdüse (1) zugeführten Brennstoffs auf den äußeren Gewindeabschnitt (17) geschraubt ist.

## Revendications

1. Injecteur (1) pour la fourniture de carburant gazeux à un moteur à combustion interne, l'injecteur (1) comprenant une structure creuse (1a) définissant une entrée de carburant (9) et un conduit de sortie de carburant (10) de l'injecteur (1) ; un obturateur (30) placé entre la dite entrée (9) et le dit conduit de sortie (10) ; et un dispositif de commande électromagnétique (47) pour déplacer le dit obturateur (30) dans une direction longitudinale (2), le dit dispositif électromagnétique (47) et le dit obturateur (30) étant logés à l'intérieur d'un compartiment étanche à l'air (46) et inaccessible au carburant ; le dit obturateur (30) comprenant une première (33) et une deuxième (34) parties d'extrémité longitudinale opposées ; un premier élément d'étanchéité (36) étant monté de manière étanche aux fluides sur la première partie d'extrémité (33) et sur la dite structure (1a) ; **caractérisé en ce qu'**il comprend en outre un deuxième élément d'étanchéité (37) monté sur la dite deuxième partie d'extrémité du dit obturateur et sur la dite structure (1a) pour définir le dit compartiment étanche à l'air (46).

2. Injecteur selon la revendication 1, **caractérisé en ce que** le dit premier (36) et le dit deuxième (37) éléments d'étanchéité comprennent des membranes élastiquement déformables respectives (43, 44) portées par la première (33) et la deuxième (34) parties d'extrémité respectivement.

3. Injecteur selon la revendication 2, **caractérisé en ce que** le dit premier (36) et le dit deuxième (37) éléments d'étanchéité comprennent des capuchons respectifs (38, 39) montés de manière étanche aux fluides sur la dite première (33) et la dite deuxième (34) parties d'extrémité respectivement ; chaque dite membrane (43, 44) étant une membrane annulaire et comprenant une partie annulaire intérieure reliée solidairement au dit capuchon associé (38, 39) et une partie périphérique extérieure saisie de manière étanche aux fluides entre deux corps de retenue respectifs de la dite structure (1a).

4. Injecteur selon la revendication 3, **caractérisé en ce que** chaque dit capuchon (38, 39) et la dite membrane relative (43, 44) font partie d'un corps respectif de matière élastomère formé en une seule pièce.

5. Injecteur selon la revendication 3 ou 4, **caractérisé en ce qu'**il comprend un conduit traversant (22) s'étendant à travers le dit compartiment étanche à l'air (46), coaxialement à un axe longitudinal (2), e-t entouré par un enroulement électrique (48) du dit dispositif électromagnétique (47) ; le conduit traversant (22) recevant avec jeu radial une tige creuse (31) du dit obturateur (30) ; les dits capuchons (38, 39) étant montés aux extrémités opposées de la dite tige (31) et comportant des passages respectifs (40, 41) reliant l'espace intérieur de la tige (31) à des chambres de carburant respectives (8, 23) situées sur des côtés opposés du dit compartiment étanche à l'air (46) ; et une (8) des dites chambres de carburant (8, 23) est adjacente au dit conduit de sortie (10) et en communication avec la dite entrée (9).

6. Injecteur selon la revendication 5, **caractérisé en ce qu'**il comprend des moyens de liaison pour relier le dit obturateur (30) à une structure de support (1a) ; les dits moyens de liaison comprenant le dit premier (36) et le dit deuxième (37) éléments d'étanchéité.

7. Injecteur selon une quelconque des revendications précédentes, **caractérisé en ce qu'**il comprend une partie de connexion (13, 17), à travers laquelle s'étend le dit conduit de sortie (10) ; la dite partie de connexion ayant au moins une partie filetée extérieurement (17).

8. Injecteur selon la revendication 7, **caractérisé en ce que** la dite partie de connexion comprend un épaulement extérieur (13) qui repose sur une surface de support d'un corps creux de support et d'amenée de carburant (3) commun à tous les injecteurs sur le moteur ; la dite partie filetée extérieurement (17) faisant saillie vers l'extérieur du dit corps creux de support et d'amenée de carburant (3) ; et
un premier écrou (16) est vissé sur la dite partie filetée extérieurement (17) pour presser le dit épaulement extérieur (13) contre la dite surface de support.

9. Injecteur selon la revendication 8, **caractérisé en ce qu'**un deuxième écrou (18a) d'un tube (18) pour transporter le carburant fourni par le dit injecteur (1) est vissé sur la dite partie filetée extérieurement (17).
